# EUROPEAN PATENT APPLICATION

(11) **EP 3 838 969 A1**
(43) Date of publication of application: **23.06.2021**
(21) Application number: 19306722.0
(22) Date of filing: 20.12.2019
(51) Int. Cl.: C08J 5/04, C08J 5/24

(54) **TWO-STEPS LIGHT AND HEAT CURABLE RESIN COMPOSITION**

(71) Applicant: Université de Haute Alsace, 68200 Mulhouse (FR)
(72) Inventor: MÉTRAL, Boris, 68100 MULHOUSE (FR); BURR, Dominique, 68270 WITTENHEIM (FR); ALLONAS, Xavier, 68100 MULHOUSE (FR); GOMEZ, Tiffany, 68260 KINGERSHEIM (FR)
(74) Representative: Novagraaf Technologies

(57) **Abstract**

The present invention relates to the field of a protection system based on composite material used in ballistics. The application relates to a two-steps light and heat curable resin composition, a process of forming in a first step a prepreg using said resin and in a second step a protection system comprising the laminated composite of the invention.

## Description

### Technical field

The invention belongs to the field of protection systems based on composite material used in ballistics. Composite materials are increasingly used in the defence, homeland security, civil and commercial sectors. They combine lightness and performance with high protection capacity. The invention's field also focuses on materials used to protect people (bullet-proof vests, helmets) and armoured vehicles. Additional applications such as in buildings, sport, leisure and industry,. The aerospace and automotive fields are also included.

The application relates to a two-steps light and heat curable resin composition, a process of forming a prepreg and a laminated composite using said composition and protection systems comprising the laminated composite of the invention.

In the description below, references between [ ] refer to the list of references at the end of the examples.

### Technical background

Despite several attempts during World Wars to introduce additional protection for troops, only helmets were massively provided as body armours but were too heavy. Shielding was mostly reserved to tanks and battleships until progresses in Chemistry after WW2 allowed the preparation of polymers with similar or superior properties once combined or not with steel.

Two breakthroughs opened the possibility to better protect men and vehicles. Those are the synthetic glues, adhesives and sealants that allowed the use of multiple layers of material with better adhesion and the synthetic polymers, in particular aromatic polyamides or aramid (Kevlar®, Twaron®, figure 1), high modulus polypropylene (HMPP: Innegra®) and Ultra-high-molecular-weight polyethylene (UHMWPE: Spectra Shield®, Dyneema®), commercialised since the 70's, which are corrosion resistant, lighter and more resistant than steel.

As a result, glues and synthetic polymers largely replaced or completed steel in ballistic protection during the last 40 years.

Current ballistic protection can be found in buildings as well as in several types of equipment such as body armours, helmets, face protections and vehicle armours.

The protection may combine several materials, such as steel, ceramics and polymers. Armoured vehicles usually combine these three protections. Helmets, which must be as light as possible, only contain polymers. Vests can also incorporate ceramic or steel plates depending on the bullet protection sought. The ballistic performance of helmets depends on the composite material properties, the type of fibres and matrix, the fibre orientation, the interaction between the fibres and matrix, as well as on the parameters of processing the composites dedicated for the helmet shell.

Polymer layers are assembled with resin matrixes to form a sandwich of multilayers of either aramid or UHMWPE.

Recent developments in ballistic protection combined several materials but their reliability in real environment is still being questioned.

Examples may include "liquid body armour" (BAE Systems) which consists of Kevlar™ that is soaked in one of two fluids - either a shear thickening fluid or a magnetorheological fluid. Questions arise about the remaining protection after multiple hits. Anothers example is "dragon skin" (North American Development Group) based on overlapping series of high tensile strength ceramic discs encased in a fibre glass textile. The vest failed to pass the NIJ Level III tests.

Different properties of fibres all have advantages and drawbacks. Steel is far too heavy for soft armour uses and its use is limited for hard armour vehicles due to additional petrol consumption. Carbon fibre, although extremely strong and stable, is flammable and expensive. S2-glass fibres offer the best compromise efficiency/cost for composites but their brittleness and weight prevents them from a large use in ballistics. UHMWPE present an excellent stability and protection for a low weight. However, it didn't displace aramids due to high costs and temperature sensitivity. At last, aramids offer a good compromise for ballistic protection but they require additional protection (tissue, water-proofing) against UV and moisture.

To this day, both aramid and UHMWPE have been further improved for ballistic uses.

Spectra™ fibre (UHMWPE), based on a normal composite unidirectional fibre substrate, requires very low amounts of resin hence lowering the weight of the protection equipment. Honeywell claims that the fibre content is therefore optimised with only a minimal amount of resin to supply enough structure so that the fibre can respond [1].

As for aramids, Teijin products aramids with higher resisting grades such as Twaron™ or Technora™ (copolymer blend with higher tensile strength). DuPont also developed multidirectional layers of textile (eg. Kevlar™ XP) or higher density laminates (eg. Kevlar™ XD). For instance, the Kevlar™ XP used for soft or hard armour is a combination of Kevlar™ KM2 Plus fibre and a thermoplastic resin that creates an entire matrix system, improving upon the original Kevlar™ technology. The company claims that such fabric provides superior ballistic protection whilst decreasing the weight by 10%.

Although the nature of the fibre determines the ballistic protection, resins can greatly help with adhesion of the layers and weight gain.

Resins are required to bind the layers of the fibres into a laminated composite. Their composition and properties shall not be detrimental for the ballistic protection and even improve the properties of the fibre. A subtle balance shall be found depending on their use (Table 1):

**Table 1: Expectations from resins depending on their ballistic uses.**

| | Vests | Helmets | Vehicle | Buildings |
|---|---|---|---|---|
| High rigidity | No | Accepted | Accepted | Accepted |
| Stickiness | Medium | Medium | Medium | Not Relevant |
| VOC emissivity | Low | Very low | Critical | Critical |

Resins have to be sticky enough to bind the layers and to minimise the amount of applied resin. However, they have to maintain the elasticity of the fabrics (for example aramid fabrics). If too rigid, ballistic vests will be too uncomfortable to wear. In addition, the fabric layers won't bend to spread the impact force over a larger surface hence diminishing the protection performance.

One requirement they all have in common is that they have to release very low VOC quantities, especially in confined places such as vehicles and buildings.

Two main classes of resins are usually used for ballistics: phenolics and thermoplastics.

Phenolic resins are the most widely used resin systems in armour applications. They offer the best ratio cost-performance with an excellent resistance to heat and flame at low cost. The phenolic matrix can be combined with a thermoplastic resin (such as polyvinylbutyral (PVB)) which act as plasticisers to produce complex shapes such as helmets.

Epoxy resin are not widely used for manufacturing ballistic laminated composite but they offer several advantages such as a low curing temperature and excellent adherence for laminates. We can distinguish 3 main categories: bisphenol A, F and Novolac epoxy resins [2].

Epoxies generally out-perform most other resin types in term of mechanical properties, excellent adhesion and resistance to environmental degradation. In addition, some other properties can be mentioned such as low shrinkage, long pot life, lower vapour, easier mix ratios, low curing temperatures and wear resistance.

The Novolac resins are specifically designed to provide an increase of the thermal stability with high cross-link densities leading to complex three-dimensional molecular structures needed for a higher glass transition temperature, or Tg.

The polymerisation of phenolic resins, containing formaldehyde residues, may release water vapour and formaldehyde during the curing process. As a result, the polymerisation of phenolic resins produces bubbles in the resins which reduce their mechanical properties which are lower than those of epoxies and most other high-performance resins. In addition, phenolic resins release considerable amounts of toxic volatile organic compounds (VOC) such as phenol and formaldehyde. These dangerous chemicals are facing regulatory restriction and can cause serious concerns for the long term safety of soldiers, in particular in confined spaces such as armoured vehicles.

In ballistics, both resins are capable to impregnate the fibre (for example aramid fibre) to form a combination of matrix resin and fibre reinforcement (prepreg). In addition, both phenolic and epoxy resins can further crosslink with PVB to form an homogenised network.

However, epoxy prepregs exhibit much better adhesion properties between fabric layers (i.e. aramid layers) than phenolic ones. Epoxy resins therefore prevent the fabric layers (i.e. aramid layers) from delamination under the bullet impact hence a lower ballistic performance [3].

Studies led at IFTH in Tourcoing proved that a 10 mm-thick commercial laminated composite of aramid/phenolic was releasing considerable quantities of phenol when placed at 70°C for 8 hours. This series of experiments was done in accordance with the vehicle norm VDA 276 (VOC emissions in vehicles) and showed that phenol release was 5 times over the French regulation R4412-149 threshold.

Teijin recently developed a non-phenolic ballistic laminate to avoid phenol resins safety issues. Indeed, if the intermediate layer need to be transported, it has to be performed below - 20 °C, to avoid undesired crosslinking [4].

Dupont also released a new range of Kevlar™ laminate (ACV-770) which doesn't emit VOCs and Hexion developed a new grade of low emitting phenolics.

These examples attest to a real need for the replacement of phenolics in laminates.

On the one hand, epoxies could represent an attractive alternative as they can be cured by UV light, hence avoiding high temperatures and VOC release. Nevertheless, the epoxy resin still has too strong adhesion properties and may not be compatible yet with current production processes of the prepreg and the laminated composite.

On the other hand, acrylate resins which have been widely used for UV light cured applications such as inks, coatings and adhesives could represent an attractive alternative but acrylate resin also has too many drawbacks and is not yet compatible with production processes of the prepreg and the laminated composite.

There is therefore a need designing photocurable phenol-free resin compositions that can be applied to the aramid fibre for the preparation of prepreg and eventually ballistic laminated composites.

### Detailed description of the invention

Applicants surprisingly found a new light (preferably visible-UV) and heat curable resin composition that solves the main issues exposed above. In particular, the composition according to the invention requires no phenolic resin. The amount of resin necessary is usually lower than in the known technologies and the composition may be used in a process of manufacture of laminated composite that fulfil the requirements of ballistics use.

On a first aspect, the invention relates to a two-steps light and heat curable resin composition comprising a photoinitiating system, a polymerisable resin and a thermoplastic resin.

Advantageously, the composition according to the invention comprises:
- from 0.01 to 11% of a photoinitiating system, preferably cationic photoinitiating system and/or a radical photoinitiating system, and more preferably a photoinitiating system comprising one or more compounds chosen from the group comprising iodonium, ferrocene, thianthrenium and sulfonium based compounds, phosphine oxides, hydroxyacetophenones, alkylaminoacetophenones and benzoin ethers,
- from 5 to 50% of a polymerisable resin, preferably chosen in the group comprising cyclic ether, epoxy, acrylate, epoxy-acrylate, methacrylate, styrene, ethylene, propylene, N-vinyl acrylamide, N-vinylpyrolidone resins, elastomer-epoxy and a mixture thereof,
- from 40% to 70% of a thermoplastic resin, preferably chosen in the group comprising polyvinyl butyral (PVB), polyvinyl alcohol (PVA) and ethylene-vinyl acetate (EVA).
The percentage are weight % with regards to the total mass of the composition.

In the present disclosure, it is meant by "two-steps curable" when referred to the compositions described herein, to a composition whose polymerization can be triggered by two different ways, preferably light and heat.

It is meant by "light curable" (preferably "visible-UV curable"), when refered to the compositions described herein, to a composition whose polymerization can be triggered by light emissions, preferably visible-UV.

It is meant by "heat curable", when refered to the compositions described herein, to a composition whose polymerization can be triggered by heat exposure, preferably temperature above 100°C.

Therefore, a two-steps light and heat curable composition may be understood as a composition that is able to cure in two steps, first activated by light irradiation followed by a thermal reaction.

In the present disclosure, "initiator" or "initiating" means a chemical compound or combination of compounds that initiates a polymerization reaction.

It is therefore meant by "photoinitiating system", a compound or a combination of compounds that, under the light radiation (preferably UV-visible), generates chemical active species (such as radicals or cations for example) which will be responsible for the initiation of the photopolymerization reaction, and therefore makes it possible to increase the efficiency of the photopolymerization reaction. The photoinitiating system may be chosen as a function of the light source used, according to its ability to effectively absorb the selected radiation. It will for example be possible to choose the suitable photoinitiating system using its UV-visible absorption spectrum. The photoinitiating system may comprise a "photoinitiator". The photoinitiating system may also act as a "photosensitizer", a compound that absorbs the energy radiation where the photoinitiator doesn't absorb and transfers it to the aforesaid photoiniator. The photosensitizer generally increases the efficiency of the photopolymerisation reaction or to enhance the photopolymerisation reaction when the photoiniator was not sufficient alone. Depending on the condition of radiation and type of resin a compound may act as a photoinitiator and/or as a photosensitizer.

Advantageously, the photoiniating system is suitable for working with irradiation sources that emit in the near-visible range.

Advantageously, the photoinitiating system may comprise a cationic photoinitiator and/or a radical photoinitiator.

Advantageously, the photoinitiating system may comprise one or more compounds selected from the group comprising onium salts, organometallic complexes, and non-ionic photoacids.

Advantageously, the onium salts may be selected from diaryliodonium salts and derivatives thereof, triarylsulfonium salts and derivatives thereof, and mixtures thereof. Said onium salts have preferably hexafluoroantimonate, hexafluorophosphate or tetrafluoroborate anions. Preferably the onium salts may be selected from of (4-methylphenyl)[4-(2-methylpropyl)phenyl]iodonium hexafluorophosphate, Bis-(4-methylphenyl)iodonium hexafluorophosphate), Bis(dodecyl phenyl) iodonium hexafluorophosphate, 9-(4-hydroxyethoxyphenyl) thianthrenium hexafluorophosphate, diphenyl iodonium triflate, and mixtures thereof.

Advantageously, the organometallic complexes may be selected from metallocenium salts, preferably from among ferrocenium salts such as cyclopentadienylcumen-iron hexafluorophosphate.

Advantageously, the non-ionic photoacids may be selected from alkyl/aryl sulfonic acid, fluorinated sulfonic acids, sulfonimides, tetra-aryl boronic acids, and mixtures thereof.

Advantageously, the photoinitiating system may comprise one or more compounds chosen in the group comprising:
▪ acetophenones, alkoxyacetophenones and derivatives, such as 2,2-dimethoxy-2-phenyleacetophenone and 2,2-diethyl-2-phenylacetophenone ;
▪ hydroxyacetophenones and derivatives, such as 2,2-dimethyl-2-hydroxyacetophenone, 1-hydroxycyclohexylehenyle cetone, 2-hydroxy-4'-(2-hydroxyethoxy)-2-methyl-propriophenone and 2-hydroxy-4'-(2-hydroxypropoxy)-2-methyl-propriophenone ;
▪ alkylaminoacetophenones and derivatives, such as 2-methyl-4'-(methylthio)-2-morpholino-propriophenone, 2-benzyl-2-(dimethylamino)-4-morpholino-butyrophenone and 2-(4-(methylbenzyl)-2-(dimethylamino)-4-morpholino-butyrophenone ;
▪ benzoin ethers and derivatives, such as benzoin benzyl-, methyl- and isopropyl- ethers;
▪ phosphine oxides and derivatives, such as diphenyl-(2,4,6-trimethylbenzoyl)phosphine oxide (TPO), ethyl-(2,4,6-trimethylbenzoyl)phenylphosphine oxide (TPO-L) and bis-(2,6-dimethoxybenzoyl)-2,4,4-trimethylphenyle phosphine oxide (BAPO) ;
▪ benzophenones and derivatives, such as 4-phenylbenzophenone, 4-(4'methylphenylthio)benzophenone, 1-[4-[(4-benzoylphenyl)thio]phenyl]-2-methyl-2-[(4-methylphenyl)sulfonyl]-1-propanone ;
▪ thioxanthones and derivatives, such as isopropylthioxanthone (ITX), 1-Chloro-4-propoxythioxanthone (CPTX) 2,4-diethylthioxanthone (DETX), 2,4-dimethylthioxantone, 2-chlorothioxanthone and 1-chloro-4-isopropylthioxanthone ;
▪ anthracene and derivatives, such as 9.10-diethoxy-anthracene , 9,10-Diethoxyanthracene, Alpha-Methyl-9-anthracenemethanol, 9-Hydroxymethylanthracene , Acide 9-anthracenecarboxylique, 9-Vinylanthracene, 9,10-Anthracene-dicarbonitrile, 9-Methylanthracene, 2-Ethyl-9,10-dimethoxyanthracene, 1,2,3,4-Dibenzanthracene, 9,10-Dicyanoanthracene, 9-Cyanoanthracene;
▪ quinones and derivatives, such as antraquinones including 2-ethylantraquinone and camphroquinones;
▪ benzoyl formate esters and derivatives, such as methylbenzoylformate ;
▪ metallocenes and derivatives, such as ferrocene, titanium bis(eta 5-2,4-cyclopentadien-1-yl)-bis(2,6-difluoro)-3-(1H-pyrrol-1-yl)-phenyl)and iron (cumene)cyclopentadienyl hexafluorophosphate;
▪ dibenzylidene ketones and derivatives, such as p-dimethylaminoketone ;
▪ coumarines and derivatives, such as 5-methoxy coumarine, 7-methoxy coumarine, 7-diethylamino coumarine and N-phenyleglycin coumarine; and
▪ dyes such as triazines and derivatives, fluorones and derivatives, cyanines and derivatives, safranines and derivatives, 4,5,6,7-tetrachloro-3',6'-dihydroxy-2',4',5',7'-tetraiodo-3H-spiro[isobenzofuran-1,9'-xanthen]-3-one, pyrylium or thiopyrylium and derivatives, thiazines and derivatives, flavines and derivatives, pyronines and derivatives, oxazines and derivatives, rhodamines and derivatives.

Preferably the photoinitating system may comprise a compound selected among onium salts (such as iodonium and sulfonium), phosphine oxides (such as TPO, BAPO), a ferrocene or a thianthrenium salt.

Advantageously, the photoinitiating system may further comprise ITX, CPTX, DETX, anthracene or mixtures thereof.

It is meant by "polymerisable resin", a resin which may consist only of monomers, prepolymers or a mixture of monomers and prepolymers.

Advantageously, the polymerisable resin may be selected from the group comprising:
(i) an ethylenically unsaturated monomer and/or prepolymer, the polymerization of which may be effected by free radical polymerization, preferably acrylate monomer and/or prepolymer; and/or
(ii) an cyclic ether-containing monomer and/or prepolymer; the polymerization of which may be effected by cationic polymerization, preferably epoxy-containing monomer and/or prepolymer.

Advantageously, the polymerizable resin may be an ethylenically unsaturated monomer and/or prepolymer, the polymerization of which may be effected by free radical polymerization. As used herein, the term "ethylenically unsaturated monomer" refers to a monomer that contains at least one carbon-carbon double bond. Preferably, ethylenically unsaturated monomers whose polymerization may be effected by free radical polymerization, contains at least one carbon-carbon double bond that is conjugated with an aryl moiety (e.g., phenyl), a carboxyl (C=O) group, or another double bond. Such monomers in this category include for example acrylates -[(ROCO)CHCH2]- (acrylic acid, methyl acrylate, ethyl acrylate, butyl acrylate, etc...), methacrylates -[(ROCO)C(Me)CH2]- (methacrylic acid, methyl methacrylic acid, etc...), styrene, ethylene, propylene, N-vinyl acrylamide, N-vinylpyrolidone.

Advantageously, the polymerizable resin may be an cyclic ether-containing monomer and/or prepolymer whose polymerization may be effected by cationic polymerization. Examples of these monomers include vinyl ethers -[ROCHCH2]- such as vinyl methyl ether, vinyl ethyl ether, vinyl isobutyl ether; oxetane and and epoxy monomers. As used herein, the term "epoxy monomer" refers to a moiety comprising an oxirane moiety having the structure: 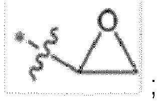 wherein "*" denotes the point of attachment of the oxirane moiety to the rest of the monomer. For example, the polymerizable component may be the epoxide monomer (EPOX) having the following structure: 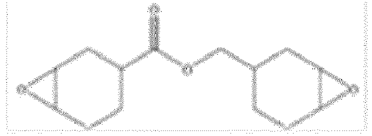 or 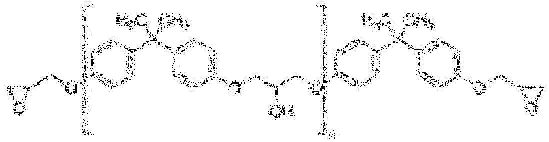 with n= 0 - 25

Advantageously, the polymerizable component may be a mixture of two or more components which are polymerizable via different polymerization mechanisms: free radical polymerization or cationic polymerization, respectively. For example, the polymerizable component may be a mixture of TMPTA and EPOX. Other examples include mixtures vinylether/acrylate and vinylether/epoxy.

Preferably, the polymerisable resin may be chosen from the group comprising cyclic ether, epoxy, acrylate, epoxy-acrylate and mixtures thereof. For example, the polymerisable resin may be chosen from the group comprising DER 331 (CAS NO. 25085-99-8), DGEBA (CAS NO. 1675-54-3), SR238 (6-prop-2-enoyloxyhexyl prop-2-enoate, CAS NO. 88250-32-2), SR508 (dipropylene glycol diacrylate, CAS NO. 57472-68-1) and mixtures thereof.

Advantageously, the composition according to the invention does not comprise any phenol or phenolic derivatives such as phenolic resin, phenoplast (formaldehyde-phenol resin) or cresol resins.

It is meant by "thermoplastic resin", a resin that repeatedly softens when heated above a certain temperature. This thermokinetic behavior will therefore result in the presence of a melting peak. On the other hand, the thermoplastic resin will become hard again below this temperature.

Advantageously, the thermoplastic resin is chosen from the group comprising polyvinyl butyral (PVB), polyvinyl alcohol (PVA), ethylene-vinyl acetate (EVA) and mixtures thereof.

Usually, acetals are formed by the well-known reaction between aldehydes and alcohols. The polyninyl butyral refers to any products of acetalation of polyvinyl alcohol with one or more aliphatic aldehydes. The ethylene-vinyl acetate consists of copolymer of ethylene and vinyl acetate.

Advantageously, the thermoplastic resin may be chosen from the group comprising polyvinyl butyral having an average molecular weight of from 10000 g/mol to 110000 g/mol, preferably from 50000 g/mol to 100000 g/mol. Polyvinyl butyral may be of formula I: 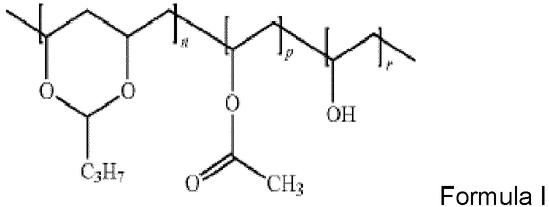 wherein the arrangement of the acetal, acetyl and hydroxyl groups are not to be regarded as fixed, n, p and r are integers and the polyvinyl butyral has an average molecular weight of from 10000 g/mol to 110000 g/mol, preferably from 50000 g/mol to 100000 g/mol .

Advantageously, the thermoplastic resin may be chosen from the group comprising polyvinyl alcohol having an average molecular weight of from 9000 g/mol to 190000 g/mol. Polyvinyl alcohol may be of formula II: 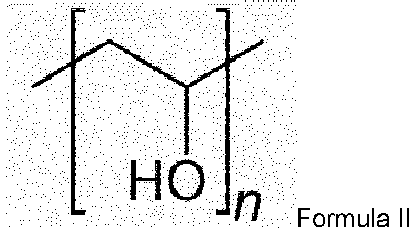 wherein n is an integer and the polyvinyl alcohol has an average molecular weight of from 9000 g/mol to 190000 g/mol. Preferably, the polyvinyl alcohol is chosen from the groupe comprising the following ultra low, low, medium, high viscosity Selvol™ PVA, and mixtures thereof:

**Table 2: Selvol™ PVA.**

| Viscosity | Viscosity Type | Degree of Polymerization | Weight Average Molecular Weight Range |
|---|---|---|---|
| 3-4 cps | Ultra Low | 150-300 | 13,000-23,000 |
| 5-6 cps | Low | 350-650 | 31,000-50,000 |
| 22-30 cps | Medium | 1000-1500 | 85,000-124,000 |
| 45-72 cps | High | 1600-2200 | 146,000-186,000 |

Advantageously, the thermoplastic resin may be chosen from the group comprising ethylene-vinyl acetate of formula III: 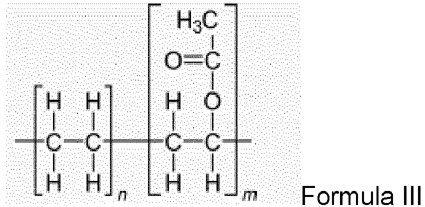 wherein n and m are integers and the ethylene-vinyl acetate has content of vinyl acetate from 15 to 50 wt-%, preferably from 14 to 32 wt-% or from 17 to 42 wt-%.

Advantageously, the two-steps curable composition according to the invention, may further comprise one or more additive(s), preferably chosen in the group comprising an organic solvent, a filler, a dye, mixed elastomer epoxy resin, rubber and mixtures thereof.

Advantageously, the organic solvent may be chosen from the group comprising alcohols such as ethanol, isopropanol, n-propanol, isobutyl alcohol and n-butyl alcohol, methoxypropanol, methoxyethanol, aromatic solvents, such as benzene, toluene or xylene, ketones such as acetone or methyl ethyl ketone, ethereal solvents, such as diethyl ether compounds or an ester such as ethyl acetate, n-butyl acetate or ethyl propionate. Solvents may be used alone or in combination.

Advantageously, the filler may be any fine inert mineral powder, at least 85% of the elements of which have a dimension of less than 0.08 mm, such as an additives in certain cements or to improve the workability and compactness of mortars and concretes. Suitable fillers may be chosen from the group comprising calcium carbonate, kaolin, talc, wollasonite, mica, silica, carbon black, dolomite, barium sulfate, ATH, MDH, diatomaceous earth, magnetite, hematite, halloysite, zinc oxide, titanium dioxide, metal oxides, ceramics (such as SiO₂, Al₂O₃) and mixtures thereof.

Advantageously, the dye may be chosen in the group comprising flavine, cyanine, xanthenic dyes, thiazines (methylene blue), acridines, N-methylacridone, phenosafranines, thiopyronines, riboflavines, phenoxazines, pyrromethenes, polymethines, fluorones, squarylium, julolidine dyes, phenoxazones, quinolinones, phtalocyanines, benzopyranones, rhodanines, crystal violet, benzofuranone derivatives, dimethyl aminostyryl benzothiazolinium iodides and mixtures thereof.

On another aspect, the invention relates to a process for preparing a prepreg comprising the steps of:
1) coating a first support with the two-steps light and heat curable composition according to the invention;
2) partially photocuring the composition on the first support, by subjecting said composition to a light emission source until a 20 to 90 % conversion rate of the reactive functions of the polymerisable resin is reached;
3) optionally transferring the composition obtained in step 2) from the first support onto a second support;
   and obtaining the prepreg.

Advantageously, the process according to the invention further comprises a step 4) of preparing a laminated composite, said step 4) comprising a thermocuring of the prepreg obtained in step 2) or in step 3), preferably at a temperature from 100 to 200°C, under a pressure from 0.5 to 5 MPa;
and obtaining the laminated composite.

Advantageously, the process according to the invention comprises the steps of:
1) coating a first support with the two-steps light and heat curable composition according to the invention;
2) partially photocuring the composition on the first support, by subjecting said composition to a light emission source until a 20 to 90 % conversion rate of the reactive functions of the polymerisable resin is reached;
3) optionally transferring the composition obtained in step 2) from the first support onto a second support;
   and obtaining the prepreg;
4) thermocuring the prepreg obtained in step 2) or in step 3), preferably at a temperature from 100 to 200°C, under a pressure from 0.5 to 5 MPa;
   and obtaining the laminated composite.

It is meant herein by "prepreg" or "prepreg layer", a pre-impregnated support with a partially photocured composition according to the invention (as obtained in step 2) or 3) of the process).

It is meant herein by "laminated composite", an assembly of one or more thermocured prepreg(s) according to the invention (as obtained in step 4) of the process).

It is meant herein by "conversion rate", the % of reactive functions of the polymerisable resin that have reacted, with respect to the quantity of reactive functions introduced in the composition, in the polymerisation process activated by the photoinitiating system in step 2) of the process according to the invention. Depending of the polymerisable resin, the reactive functions may be cyclic ether and/or unsaturated ethylene functions, preferably chosen in the group comprising cyclic ether, epoxy, acrylate, methacrylate, styrene, ethylene, propylene, N-vinyl acrylamide, N-vinylpyrolidone and epoxy-acrylate functions.

Advantageously, a partial photocuring according to step 2) of the process of the invention has a conversion rate from 20 to 90%, preferably from 30 to 70%, more preferably from 35 to 65%, and even more preferably from 40 to 60%. For example, when the reactive functions are epoxy, a partial photocuring according to step 2) of the process of the invention may have a conversion rate from 25 to 75%, preferably from 40 to 60%, For example, when the reactive functions are acrylate, a partial photocuring according to step 2) of the process of the invention may have a conversion rate from 20 to 90%, preferably from 40 to 80%, and even more preferably from 50 to 70%.

Advantageously, in step 2) of the process according to the invention, the light emission source may be any source that can irradiate in the wavelength range where the photoinitiating system is active. The light emission source wavelength may vary from ultraviolet to visible (i.e. from 250 to 800 nm), preferably from 300 to 500.

Advantageously, in step 2) of the process according to the invention, the light emission source may be any system emitting in the wavelength ranges mentioned above. For example, the light emission source may be a conventional UV arc lamp or microwave lamp based on mercury or mercury doped with elements such as iron or gallium or a LED source emitting a smaller wavelength spectrum, or a laser diode assembly.

Advantageously, in step 4) of the process according to the invention, the temperature of the thermocuring may be over 100°C, preferably from 100 to 200°C, and more preferably from 150 to 190 °C.

Advantageously, in step 4) of the process according to the invention, the prepreg layers obtained in step 2) or in step 3) may be subjected to a pressure, preferably from 0.5 to 5 MPa, preferably from 2.5 to 3.5 MPa.

Advantageously, in step 4) of the process according to the invention the pressure and heat may be applied by continuous hot calendering systems or with a semi-continous heating-press.

Advantageously, the first support and/or the second support comprise(s) a plurality of fibers, said fibers preferably being chosen in the group comprising aromatic polyamide fibers, natural fibers, basalt fibers, carbon fibers, glass fibers, and hybrids thereof. Preferably the first support and/or the second support is made of aromatic polyamide fibers.

Advantageously, the first support and the second support may be identical or different.

Advantageously, the process according to the invention may comprise a step 3) of transferring the composition obtained in step 2) from the first support onto a second support, the first and second support being preferably different.

Advantageously, the process may not comprise any step 3).

Adavantageously, the first support and the second support may be different and the first support may comprise a polyethylene terephtalate film. In a variant of the process according to the invention, the first support may be a polyethylene terephtalate film and the second support may comprise a plurality of fibers as described above. Preferably, the first support may be a polyethylene terephtalate film and the second support may be made of aromatic polyamide fibers. In that variant of the process, the partially cured composition is transferred from the first to the second support in step 3) to obtain the prepreg.

Advantageously, the laminated composite obtained according to the process of the invention comprises one or more prepreg layers.

Advantageously, the process according to the invention may further comprise a step 3a) of superimposing at least 2 prepregs obtained in step 2) or in step 3) before carrying out step 4). In that variant, after carrying out step 4) of the process of the invention, one may obtain a multilayer laminated composite. Preferably in step 3a), from 2 to 50, more preferably from 10 to 30, prepreg obtained in step 2) or in step 3) may be superimposed.

The invention also relates to a prepreg or laminated composite obtained by the process according to the invention. The laminated composite may be composed of one or more prepregs.

The invention also encompasses a laminated composite comprising one or more prepreg layer(s), the laminated composite comprising a cured composition according to the invention and at least one support comprising a plurality of fibers, said fibers preferably being chosen in the group comprising aromatic polyamide fibers, natural fibers, basalt fibers, carbon fibers, glass fibers, and hybrids thereof.

It is mean by "cured composition" according to the invention, a two-steps light and heat curable composition that may have been polymerized in the process according to the invention.

The invention thus also include a use of a two-steps light and heat curing composition according to the invention to prepare a prepreg and a mono- or multilayer laminated composite. The invention thus also include a prepreg and a mono- or multilayer laminated composite manufacturing method comprising a step of using a two-steps curing composition of the invention.

### EXAMPLES

The prepreg and laminated composite of this invention and their preparation can be understood further by the examples that illustrate some of the processes by which these materials are prepared or used. It will be appreciated, however, that these examples do not limit the invention. Variations of the invention, now known or further developed, are considered to fall within the scope of the present invention as described herein and as hereinafter claimed.

### Example 1 : Formulation of ethylenically unsaturated based resin

The PVB used is Mowital B 60H (Non-volatile content: ≥ 97,5 wt-%; content of polyvinyl alcohol, hydroxyl groups in terms of polyvinyl alcohol, 18-21 wt-%; content of polyvinyl acetate, acetyl groups in terms of polyvinyl acetate 1-4 wt-%; dynamic viscosity according to DIN 53015, at 20 °C, 10% solution in ethanolcontaining 5 % water: 160-260 mPa.s) or B 75H (Non-volatile content: ≥ 97,5 wt-%; content of polyvinyl alcohol, hydroxyl groups in terms of polyvinyl alcohol, 18-21 wt-%; content of polyvinyl acetate, acetyl groups in terms of polyvinyl acetate 0-4 wt-%; dynamic viscosity according to DIN 53015, at 20 °C, 10% solution in ethanolcontaining 5 % water: 60-100 mPa.s) from Kuraray and the acrylate resins is SR238 (6-prop-2-enoyloxyhexyl prop-2-enoate, CAS NO. 88250-32-2), SR508 (dipropylene glycol diacrylate, CAS NO. 57472-68-1) from Sartomer. Photoinitiating system used is Omnirad TPO-I from IGM (Ethyl(2,4,6-Trimethylbenzoyl)-phenyl phosphinate, CAS NO. 84434-11-7).

The thermoplastic resin with solvent was added to the ethyleniccaly resin and mixed vigorously in a ultrasound bath during 2 hours and then by a stirring plate the night.

The photoinitiating system was added to the mixture and vigorously mixed.

**Table 3: Samples 1 to 6.**

| Sample reference | | 1 | 2 | 3 | 4 | 5 | 6 |
|---|---|---|---|---|---|---|---|
| PVB | 60H | | 66.9 | | 66.5 | 47.4 | |
| | 75H | 66.5 | | 66.9 | | | 47.5 |
| Acrylate | SR238 | 28.4 | 29.0 | | | 47.4 | 47.5 |
| | SR508 | | | 29 | 28.4 | | |
| Photoinitiating system | TPO-I | 5.1 | 4.1 | 4.1 | 5.1 | 5.2 | 5.1 |

After a given reaction time, the mixture was spread onto Mylar™ film (for a thickness : 35 µm). The resin composition on the Mylar™ samples were cured using a Phoseon LED395-16W at 1000 mW/cm²during 1 to 2 minutes. The formed film onto Mylar™ was transfered onto aramid support (TwaronTM CT736, TwaronTM T750) to obtain the prepreg. The prepreg layers were placed on top of each other and then heat-pressed at 4 MPa at 190°C during 20 minutes.

### Example 2 : Formulation of cyclic ether based resin

The PVB used is Mowital B 75H or B 60H from Kuraray and epoxyde resins are DER 331 (CAS NO. 25085-99-8) or DGEBA (CAS NO. 1675-54-3) from DOW, an epoxy additive Kane Ace MX150 (KA, Bis A Epoxy, ref = MX 150, dispersed CSR type = Polybutadiene Rubber, %CSR = 40 +/- 1 wt-%, nominal viscosity 16,000 cps @ 50°C, nominal EEW 310 g/eq) from Kaneka is further added. The photoinitiating system is Speedcure 938 (S938, CAS NO. 61358-25-6, Bis-(4-t-butylphenyl)-lodonium hexafluorophosphate) from Lambson in combination wirh Isopropylthioxanthone (ITX, CAS NO. 83846-86-0) from Lamberti.

The thermoplastic resin with solvent was added to the photoinitiating system and mixed vigorously in a ultrasound bath during 2 hours and then by a stirring plate the night.

The cyclic ether resin was added to the mixture and vigorously.

**Table 4: Samples 10 to 12.**

| Sample reference | | 10 | 11 | 12 |
|---|---|---|---|---|
| PVB | 60H | | | 77.1 |
| | 75H | 67.8 | 67.9 | |
| Epoxy | DGEBA | 19.87 | 19.3 | 17.6 |
| | Kane Ace | 9.9 | 10.0 | |
| Photoinitiating system | S938 | 2.4 | 6.2 | 4.0 |
| | ITX | 0.3 | 1.1 | 1.0 |

After a given reaction time, the mixture was spread onto Mylar™ film (for a thickness : 50 µm). The resin composition on the Mylar™ samples were cured using a Phoseon LED395-16W at 1000 mW/cm² during 14 minutes. The formed film onto Mylar™ was transfered onto aramid support (TwaronTM CT736, TwaronTM T750) to obtain the prepreg. The prepreg layers were placed on top of each other and then heat-pressed at 2MPa, at 200°C during 20 minutes.

### Example 3 : Measured parameters

**Table 5 : parameters.**

| **Cyclic ether based formulations (10** - **12)** | **Acrylate based formulations (1-6)** |
|---|---|
| **% Conversion** | |
| On BaF2, IR tablet, point by point as a function of irradiation time. | On PP sheet, RT-FTIR in Rapid Scan mode for kinetics monitoring, irradiation duration 120s, |
| LED 395, 16W, 1000-1100 mW/cm², phoseon LED. | UVW LEDave 395nm, 900 mW/cm². |

| **Resin % and adhesion force** | |
|---|---|
| Adhesion force measured by peeling on Instron 250kN traction machine. 4 folds of 5.5x25cm of which 10cm between two folds are not glued to have a grip by the jaws on 5 cm. | |
| Machine parameters: 1 mm/min to 5N then 2 mm/min. The 5 N are to be added to the final value. | |
| Measurement of the % resin on these folds in order to have a resin/adhesion relationship. | |

| **Tg** | |
|---|---|
| DSC Q200 TA, 10°C/min, range -10°C to 200-250°C. Penetrated capsule. | |
| These values are those measured on polymerized film on GF when there is GF. | |
| Otherwise they are parts of polymerized films during transfer/adhesion tests on a surface of 10x12cm. | |

**Table 6: results.**

| Sample reference | Conversion rate (%) | % Resin (%) | Adhesion force (N) | Tg (°C) |
|---|---|---|---|---|
| 1 | 80 | 20 | 50 | 70.8 |
| 2 | 80 | 18 | 46 | 70 |
| 3 | 54 | 12 | 66 | 71 |
| 4 | 70 | 11 | - | 70 |
| 5 | 88 | 8.8 | 20 | 70 |
| 6 | 88 | 8.8 | bonne | 70 |
| 10 | 30 | 7.7 | 65 | 48 |
| 11 | 48 | 10 | 40 | 46 |

### Example 4 : Balistic tests

The impact resistance of a.22 caliber projectile and a 1.102g mass have been tested according to Stanag 2920 standard. The result for a Twaron CT736 reinforcement gives an average V50 speed between 620 and 660m/s for a laminate with a surface mass of 8 - 9kg/m².

**Table 7: ballistic results.**

| Sample reference | **V50 (m/s)** |
|---|---|
| 1 | 638 |
| 10 | 621 |
| 11 | 620 |

### List of references

[1] Jay, M. L. "A call to arms" Composites Manufacturing, Jan-Feb 2017, 16-21.
[2] Durig, J. D., Comparisons of Epoxy Technology for Protective Coatings and Linings in Wastewater Facilities, The Industrial Protective Coatings Conference and Exhibit Proceedings, SSPC 99-14, pp. 31-37.
[3] Nayak et al., Polym. Composites, 2012, 443; Gopinath et al. Composites Structures, 2012, 94, 2690 ; Cheeseman et al. Composite Structures, 2003, 61, 161.
[4] WO 2013/124147A1.

## Claims

1. A two-steps light and heat curable resin composition comprising:
- from 0.01 to 11% of a photoinitiating system,
- from 5 to 50% of a polymerisable resin,
- from 40% to 85% of a thermoplastic resin.

2. The two-steps curing composition of claim 1, further comprising one ore more additive(s), the additive being preferably chosen in the group comprising an organic solvent, a filler, a dye, mixed elastomer epoxy resin, rubber and mixtures thereof.

3. The two-steps curing composition according to claim 1 or 2, wherein the photoinitiator is a cationic photoinitiator or a radical photoinitiator, preferably chosen in the group comprising onium salts, phosphine oxides, ferrocenes and thianthrenium salts and mixtures thereof.

4. The two-steps curing composition according to any of claims 1 to 3, wherein the photosensitizer is chosen in the group comprising isopropylthioxanthone, 1-Chloro-4-propoxythioxanthone, 2,4-diethylthioxanthone, an anthracene, and mixtures thereof.

5. The two-steps curing composition according to any of claims 1 to 4, wherein the polymerisable resin is chosen in the group comprising an ethylenically unsaturated monomer, the polymerization of which may be effected by free radical polymerization, and/or an cyclic ether-containing monomer, the polymerization of which may be effected by cationic polymerization.

6. The two-steps curing composition according to any of claims 1 to 5, wherein the thermoplastic resin is chosen in the group comprising ethylenevinyl acetate, polyvinyl alcohol, polyvinyl butyral and mixtures thereof.

7. The two-steps curing composition according to any of claims 1 to 6, wherein the organic solvent is chosen in the group comprising ketones, 1-methoxy-2-propanol and (2-methoxy-methylethoxy)-propanol).

8. A process for preparing a prepreg and a laminated composite comprising the steps of:
1) coating a first support with the composition according to any of claims 1 to 7;
2) partially photocuring the composition on the first support, by subjecting said composition to a light emission source until a 20 to 90 % conversion rate of the reactive functions of the polymerisable resin is reached;
3) optionally transferring the composition obtained in step 2) from the first support onto a second support;
and obtaining the prepreg.

9. The process according to the preceding claim, further comprises a step 4) of preparing a laminated composite, said step 4) comprising a thermocuring of the prepreg obtained in step 2) or in step 3), preferably at a temperature from 100 to 200°C, under a pressure from 0.5 to 5 MPa;
and obtaining the laminated composite.

10. The process according to claim 9, further comprising a step 3a) of superimposing at least 2 prepreg layers obtained in step 2) or in step 3), preferably superimposing from 2 to 50 and more preferably superimposing from 10 to 30, before carrying out step 4) and obtaining laminated composite.

11. The process according to any of claims 8 to 10, wherein the first support and/or the second support comprise(s) a plurality of fibers, said fibers preferably being chosen in the group comprising aromatic polyamide fibers, natural fibers, basalt fibers, carbon fibers, glass fibers, and hybrids thereof.

12. The process according to any of claims 8 to 11, wherein the first support and the second support are identical or different.

13. The process according to claim 12, wherein the first support and the second support are different and the first support comprises polyethylene terephtalate film.

14. A laminated composite obtained by the process according to any of claims 9 to 13.

15. A laminated composite comprising one or more prepreg layer(s), each prepreg comprising a cured composition according to any of claims 1 to 7 and a support comprising a plurality of fibers, said fibers preferably being chosen in the group comprising aromatic polyamide fibers, natural fibers, basalt fibers, carbon fibers, glass fibers, and hybrids thereof.

16. Use of a two-steps curing composition according to any of claims 1 to 7 to prepare a prepregor a multilayer laminated composite.
